# EUROPÄISCHE PATENTSCHRIFT

(11) **EP 0 834 672 B1**
(45) Veröffentlichungstag und Bekanntmachung des Hinweises auf die Patenterteilung: **23.04.2003**
(21) Anmeldenummer: 97115550.2
(22) Anmeldetag: 08.09.1997
(51) Int. Cl.: F16D 65/56

(54) **Sattelscheibenbremsen**
Caliper disk brakes
Freins à disque à étrier

(30) Priorität: 11.09.1996 DE 19636943
(43) Veröffentlichungstag der Anmeldung: 08.04.1998
(73) Patentinhaber: WABCO Perrot Bremsen GmbH, 68229 Mannheim (DE)
(72) Erfinder: Jäger, Hellmut, Dipl.-Ing., 67067 Ludwigshafen (DE); Macke, Wlodzimierz, Dipl.-Ing./Politechnikum, 68542 Heddesheim (DE); Antony, Paul, Dipl.-Ing., 67550 Worms (DE)
(74) Vertreter: Patentanwälte Leinweber & Zimmermann

(56) Entgegenhaltungen:
- EP-A- 0 599 533
- EP-A- 1 013 958
- DE-U- 9 000 256
- US-A- 4 429 768
- US-A- 5 520 267

## Beschreibung

Die Erfindung betrifft eine Sattelscheibenbremse mit einer ein drehbares Nachstellteil aufweisenden und in einem Innenraum eines Sattels befindlichen Nachstellvorrichtung, bei der sich das drehbare Nachstellteil derart in eine Durchgangsöffnung in dem Sattel erstreckt, daß es von außerhalb des Sattels betätigbar ist, und bei der eine Dichtung zum Abdichten der Durchgangsöffnung vorgesehen ist.

Eine solche Scheibenbremse ist beispielsweise aus der EP-B-569 031 bekannt. Ferner ist sie in der deutschen Patentanmeldung 195 07 308 vom 2. März 1995 beschrieben.

Die bekannte Scheibenbremse weist im Inneren des Bremssattels eine parallel zu der Bremsscheibenebene angeordnete Zuspannvorrichtung mit einer Nockenkontur auf, bei deren Betätigung eine Wegzunahme in Richtung Bremsscheibe erfolgt, so daß mindestens eine der Nockenkontur vorgelagerte Druckspindel einen Bremsbelag gegen die Bremsscheibe drückt. Zum Einstellen des Bremslüftspiels wegen Bremsbelagverschleißes ist die Bremse mit einer Nachstellvorrichtung versehen, die von der Zuspannvorrichtung betätigt wird, um ihrerseits die Druckspindel(n) derart zu betätigen, daß eine Längenverstellung zum Lüftspielausgleich erfolgt.

Von entscheidender Bedeutung zur Einstellung des Lüftspiels und damit zur Sicherstellung der erforderlichen Leistungsfähigkeit der Bremse ist dabei insbesondere die Leichtgängigkeit der Nachstellvorrichtung. Da diese Leichtgängigkeit durch Verunreinigungen beeinträchtigt werden kann, muß die Nachstellvorrichtung unbedingt gegen das Eindringen von Verunreinigungen geschützt werden.

Nun stellt sich aber bei der beschriebenen Sattelscheibenbremse das Problem, daß sich das oben erwähnte drehbare Nachstellteil in die nach außen offene Durchgangsöffnung in dem Sattel erstreckt, was erforderlich ist, damit es von außerhalb des Sattels betätigbar ist. Dabei weist das Nachstellteil bei der bekannten Sattelscheibenbremse an seinem freien Ende einen Schraubkopf auf, so daß die Nachstellvorrichtung bei Wartungs- arbeiten an der Bremse oder für eine Lüftspieleinstellung nach einem Bremsbelagwechsel über dieses Nachstellteil von außen her justiert werden kann.

Um nun das Eindringen von Verunreinigungen über die Durchgangsöffnung in das Sattelinnere zu verhindern, wo solche Verunreinigungen beispielsweise die Nachstellvorrichtung beeinträchtigen könnten, ist die Durchgangsöffnung bei der bekannten Scheibenbremse durch eine als Verschlußstopfen ausgebildete Dichtung verschlossen. Dieser Verschlußstopfen wird zu Wartungsund Einstellarbeiten an der Bremse vom Bremssattel entfernt, so daß die Durchgangsöffnung während der Ausführung dieser Arbeiten unverschlossen ist. Daher können während dieser Arbeiten Verunreinigungen, d.h. beispielsweise Schmutz und Feuchtigkeit in den Bremssattelinnenraum gelangen und dort beispielsweise die Funktionsfähigkeit der Nachstellvorrichtung beeinträchtigen.

Wird dann nach Abschluss der Wartungsarbeiten noch vergessen, den Verschluss-Stopfen wieder ordnungsgemäß einzusetzen bzw. geht er gänzlich verloren, ist keinerlei Schutz der empfindlichen Nachstell- und Zuspannteile mehr vorhanden.

Aus der US-A-5,520,267 ist eine Sattelscheibenbremse bekannt, bei der eine Rückstellwelle 82 von außen zugänglich angeordnet ist. Die Rückstellwelle ist mit zwei Dichtungen 84 und 86 in der Durchgangsöffnung abgedichtet. Sie überträgt kein Drehmoment während des Nachstellens, sondern dient lediglich dem Zurückstellen der Bremse beispielsweise zum Zwecke des Belagersatzes.

Die EP 1 013 958 A2 betrifft eine Sattelscheibenbremse. Die ihr zugrundeliegende Anmeldung nimmt Prioritäten vom 20. Juni 1995 und vom 15. Februar 1996 in Anspruch. Die EP 1 013 958 A2 ist am 28. Juni 2000 veröffentlicht worden. Bei der darin beschriebenen Bremse ist ebenfalls eine Rückstellwelle 35 vorgesehen, die nicht zur Übertragung von Drehmoment beim Nachstellen, sondern nur zum Zurückstellen der Bremse dient. Zur Abdichtung dient eine Schutzkappe 43.

Der Erfindung liegt die Aufgabe zugrunde, eine zuverlässige Abdichtung des Sattelinnenraums an der Durchgangsöffnung zu schaffen.

Erfindungsgemäß wird die gestellte Aufgabe bei einer Sattelscheibenbremse der eingangs genannten und beispielsweise aus der EP-B-569 031 bekannten Art dadurch gelöst, dass die Dichtung eine Ringdichtung ist, die mit ihrer Außenseite an der Innenwand der Durchgangsöffnung und mit ihrer Innenseite an einer radialen Mantelfläche des Nachstellteils anliegt.

Da die erfindungsgemäße Dichtung im Gegensatz zu der in Form eines Verschlußstopfens ausgebildete bekannte Dichtung nur an einer radialen Mantelfläche des Nachstellteils anliegt, ist zumindest die Stirnseite des Nachstellteils auch bei angebrachter Dichtung von außen zugänglich, weshalb es nicht erforderlich ist, die Dichtung für Wartungs- oder Justierarbeiten zu entfernen. Daher ist auch während der Wartungs- und Justierarbeiten der Sattelinnenraum und damit die Nachstellvorrichtung vor Verschmutzung sicher. Darüber hinaus besteht nicht die Gefahr, daß vergessen wird, die Dichtung nach Abschluß der Arbeiten wieder anzubringen, weil sie ja für das Ausführen der Arbeiten gar nicht erst entfernt werden mußte.

Die Innenseite der Dichtung kann im Prinzip an beliebiger Stelle an der radialen Mantelfläche des Nachstellteils anliegen. Erfindungsgemäß bevorzugt handelt es sich bei der radialen Mantelfläche aber um den Grund einer Ringnut an dem Nachstellteil. Diese Ausgestaltung ist im Hinblick darauf vorteilhaft, daß das Nachstellteil drehbar ist, weshalb die Innenseite der Dichtung unter Beibehaltung des Dichteffektes von einem Mitdrehen mit dem Nachstellteil entkoppelt sein muß, um eine Beschädigung z.B. durch Materialverwindungen zu vermeiden. Ferner kann eine solche Nut zum Festlegen der Innenseite der Dichtung in Axialrichtung dienen, so daß Materialüberdehnungen vermieden werden und die Dichtflächen vollflächig anliegen. Schließlich besteht ein Vorteil darin, daß die Mantelfläche des Nachstellteils nur im Bereich der Nut einer besonderen Oberflächenbehandlung unterzogen werden muß, weil ja die Nut die mögliche Anlagefläche der Dichtung an dem Nachstellteil begrenzt.

Bevorzugt liegt die Dichtung mit einer axialen Deckseite an der entsprechenden Seitenwand der Ringnut an. Dadurch wird zusätzlich zu der Radialabdichtung am Nutgrund noch eine Axialabdichtung erreicht.

Dabei kann die Seitenwand, an der die axiale Deckseite der Dichtung anliegt, schräg angestellt sein. Dadurch wird der Dichteffekt noch weiter gesteigert.

Zur Schaffung einer weiteren Axialabdichtung kann der Querschnitt der Durchgangsöffnung von innen nach außen hin zunehmen, wobei die Dichtung mit ihrer entsprechenden axialen Deckseite an der aus der Querschnittszunahme resultierenden Fläche anliegt. Bei stufenartiger Querschnittszunahme durch Anbringen beispielsweise einer konzentrisch zur Durchgangsöffnung liegenden Sackbohrung mit größerem Durchmesser, liegt die aus der Querschnittszunahme resultierende Fläche senkrecht zur Innenfläche der Durchgangsbohrung und bildet einen Absatz.

Zur Verbesserung sowohl des radialen als auch des axialen Dichteffekts ist nach einer besonders bevorzugten Ausführungsform der Erfindung die Außenseite der Dichtung um eine vorbestimmte Strecke in axialer Richtung bezüglich ihrer Innenseite versetzt.

Erfindungsgemäß bevorzugt hat die Dichtung im Bereich der Anlage an dem Nachstellteil eine geringere Wandstärke als im Bereich der Anlage an der Innenwand der Durchgangsöffnung, was einerseits die Positionierung gegenüber dem Bremssattel und andererseits durch Vermeidung von Haftmomenten die Entkopplung gegenüber dem drehbaren Nachstellteil gewährleistet.

Die Dichtung kann an ihrer Außenseite und/oder an ihrer Innenseite mindestens eine Dichtlippe aufweisen. Dabei dienen Dichtlippen an der Außenseite in erster Linie einer Verbesserung der Dichtwirkung an der Innenwand der Durchgangsöffnung. Dichtlippen an der Innenseite der Dichtung dienen neben der Verbesserung der Abdichtung an der radialen Mantelfläche des Nachstellteils auch der Entkopplung von der Drehbewegung des Nachstellteils.

Nach einer weiter bevorzugten Ausführungsform der Erfindung verläuft die Dichtung in ihrem in radialer Richtung gesehenen Mittelbereich infolge Materialüberschusses nicht gradlinig. Mit anderen Worten liegt der genannte Mittelbereich in Falten, wodurch evtl. von dem Nachstellteil auf den inneren Bereich der Dichtung übertragene Relativbewegungen unter Beibehaltung dichtender Anlage ausgeglichen werden können.

Bevorzugt ist die Dichtung aus einem elastischen Material, wie etwa Gummi.

Zum besseren Eindrücken kann eine Verstärkungseinrichtung im äußeren Bereich der Dichtung vorgesehen sein. Dabei kann es sich beispielsweise um einen eingelegten Metallring handeln.

Neben der vorstehend beschriebenen Dichtung in Ringform, kann auch ein die Durchgangsöffnung verschließender, abnehmbarer Verschlußstopfen vorgesehen sein, wie er bereits aus dem Stand der Technik bekannt ist. Dieser muß dann allerdings für Wartungs- oder Justierarbeiten entfernt werden.

Um zu verhindern, daß der Verschlußstopfen verlorengeht und um eine "Gedächtnisstütze" für an der Bremse arbeitende Bedienpersonen zu schaffen, kann eine Halteeinrichtung vorgesehen sein, die den Verschlußstopfen auch dann mit dem Sattel verbunden hält, wenn er von der Durchgangsöffnung abgenommen ist. Mit anderen Worten hängt der Verschlußstopfen an einer Art "Fangleine" so daß er nicht verlorengehen kann. Darüber hinaus erinnert ein an der "Fangleine" hängender Verschlußstopfen die an der Bremse arbeitende Person daran, daß sie nach Abschluß der Arbeiten den Verschlußstopfen wieder einsetzen sollte.

Nachstehend ist die Erfindung anhand bevorzugter Ausführungsbeispiele unter Bezugnahme auf die beiliegende Zeichnung mit weiteren Einzelheiten näher erläutert.

Dabei zeigen
- Fig. 1 und 2: jeweils Schnitte durch eine Bremse nach der EP-B 569 031, wobei allerdings in Fig. 2 bereits die erfindungsgemäße Dichtung gezeigt ist,
- Fig. 3: einen Schnitt durch eine Bremse nach der deutschen Patentanmeldung 195 07 308, wobei allerdings auch hier bereits die erfindungsgemäße Dichtung gezeigt ist,
- Fig. 4: eine vergrößerte Ansicht des Bereichs "X" in Fig. 2 und
- Fig. 5: eine vergrößerte Ansicht es Bereichs "X" in Fig. 3.

In den Figuren sind pneumatisch betätigte Gleitsattel-Scheibenbremse gezeigt. Sie weisen einen Bremssattel 1 auf, der in üblicher Weise mit seinen beiden Schenkeln eine Bremsscheibe 2 übergreift. Beidseitig der Bremsscheibe 2 sind Bremsbacken 3, 4 in einem nicht gezeigten Bremsenträger bzw. im Bremssattel 1 geführt und abgestützt, und der Bremssattel 1 ist mit ebenfalls nicht gezeigten Führungsmitteln quer zur Bremsscheibe 2 verschieblich gelagert. Der Bremssattel 1 ist einseitig mit einer Zuspanneinrichtung 5 ausgestattet.

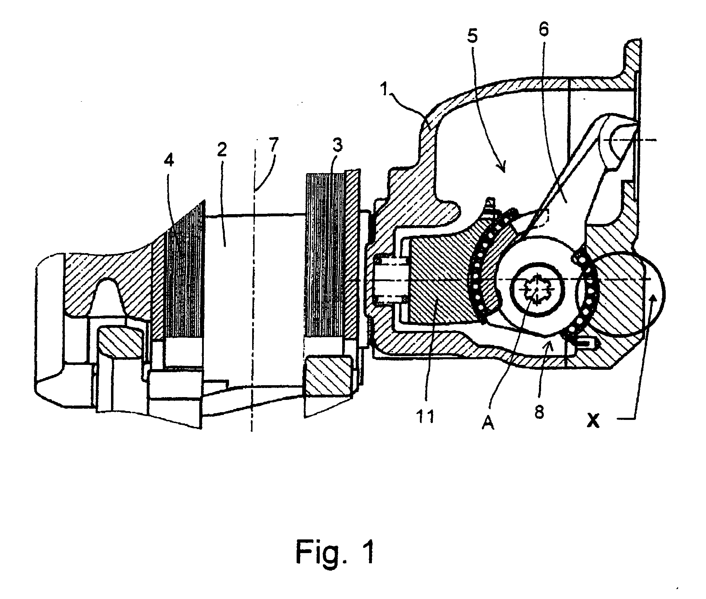

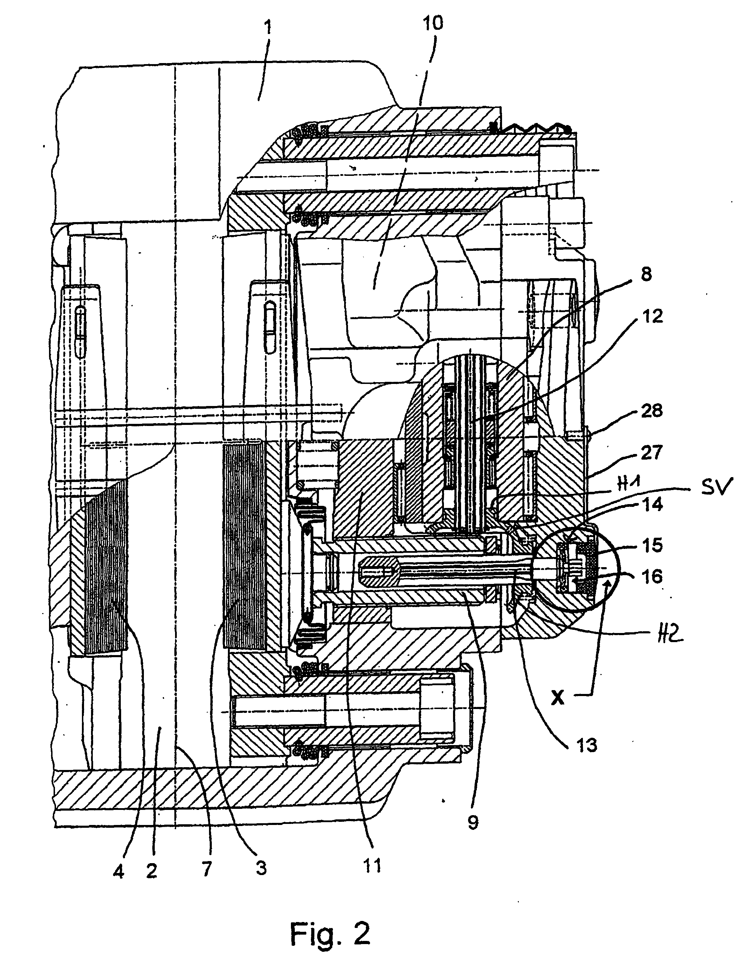

Die Zuspanneinrichtung 5 weist einen Schwenkhebel 6 auf, dessen Schwenkachse A im wesentlichen parallel zur Hauptebene 7 der Bremsscheibe 2 liegt. Bei der in den Fig. 1 und 2 dargestellten Bremse liegt die Schwenkachse A des Schwenkhebels 6 fest. Die Erfindung ist aber nicht auf dieses Ausführungsbeispiel beschränkt. Vielmehr kann sie auch bei solchen Bremsen Anwendung finden, bei denen die Schwenkachse des Bremshebels ihre Lage mit zunehmender Zuspannung ändert. Der Bremshebel 6 ist radial an einer Zuspannwelle 8 angebracht.

Die Zuspannwelle 8 erstreckt sich entlang der Schwenkachse A und weist eine Nockenkontur auf, die bei einem Verdrehen um ihre Längsachse zu einer Relativverschiebung des Bremssattels 1 und der Bremsbacke 3 in Axialrichtung der Bremsscheibe 2 führt. Dabei wird die Kraft von der Zuspannwelle 8 über vorgelagerte Druckspindeln 9, 10 auf die Bremsbacke 3 übertragen.

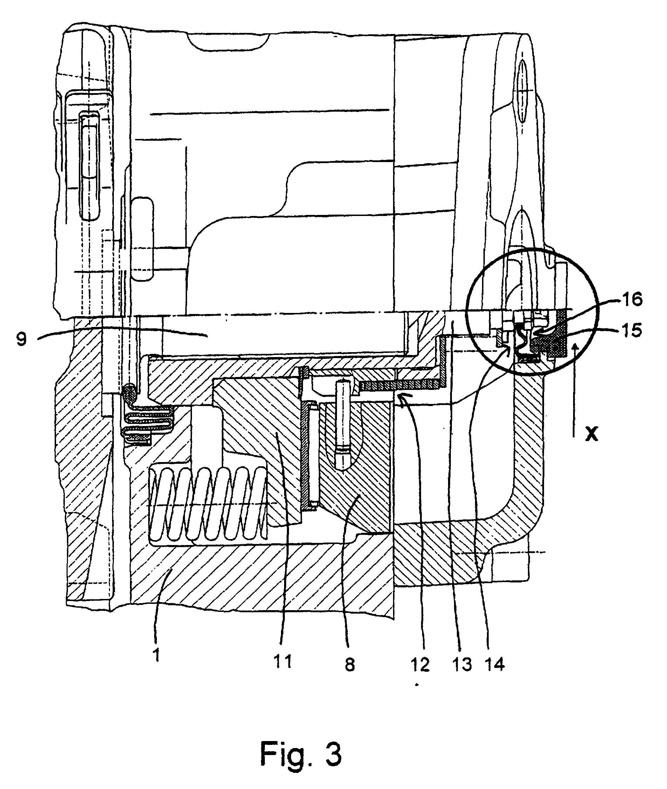

Gemäß den Fig. 1 und 2 sind bei dieser Ausführung zwei Spindeln 9 und 10 vorgesehen, die in einem Druckstück 11 angeordnet sind. Wiederum gilt aber, daß die Erfindung nicht auf diese Ausführungsform beschränkt ist. Vielmehr ist sie auch anwendbar bei einer mittig im Druckstück 11 angeordneten einzelnen Spindel 9 nach der deutschen Patentanmeldung 195 07 308 (vgl. vorliegende Fig. 3), wie auch bei Ein- oder Zwei-Spindelbremsen, bei denen gar kein Druckstück vorgesehen ist, weil die nachstellbaren Spindeln im Bremssattel 1 gelagert sind.

Die Bremsen sind jeweils mit einem Nachstellmechanismus 12 versehen, der einerseits mit der Zuspannwelle 8 und andererseits mit den Druckspindeln 9, 10 im Sinne einer Drehmomentübertragung gekoppelt ist. Dabei erstreckt sich ein drehbares Nachstellteil 13 des Nachstellmechanismus 12 in eine Durchgangsöffnung 14 des Bremssattels 1, wobei das Nachstellteil 13 zur manuellen Luftspieljustierung mittels Werkzeug endseitig einen Schraubkopf aufweist, und die Durchgangsöffnung 14 des Sattels 1 durch einen Verschlußstopfen 15 verschlossen ist.

Zwischen dem Verschlußstopfen 15 und dem, Sattelinnenraum ist innerhalb der Durchgangsöffnung 14 die erfindungsgemäße Ringraumabdichtung 16 angeordnet. Die Ringraumabdichtung 16 ist derart ausgeführt, daß sie mit ihrem äußeren Bereich 17 in der Durchgangsöffnung 14 gehalten ist und mit ihrem inneren Bereich 18 in eine Ringnut 19 des drehbaren Nachstellteils 13 eingreift. Die axiale Wandstärke der Ringraumabdichtung 16 ist im Bereich des Eingriffs in die Ringnut 19 geringer als im Bereich der Anlage an der Innenwand der Durchgangsöffnung 14, so daß einerseits die Positionierung gegenüber dem Bremssattel 1 und andererseits durch Verringerung von Haftmomenten die Entkoppelung gegenüber dem drehbaren Nachstellteil 13 gewährleistet ist.

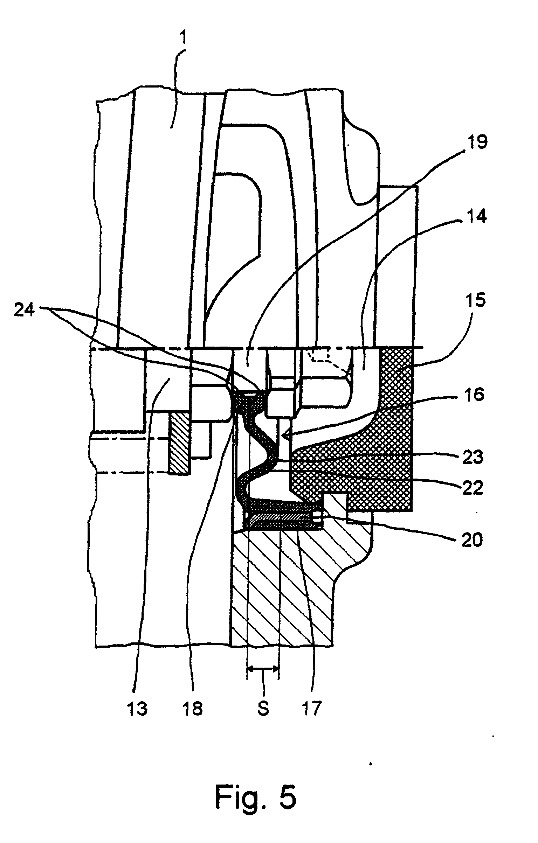

Zum besseren Eindrücken bis zum Grund der Durchgangsöffnung 14 ist gemäß Fig. 5 der äußere Bereich 17 der Ringraumabdichtung 16 durch einen eingelegten Metallring 20 verstärkt.

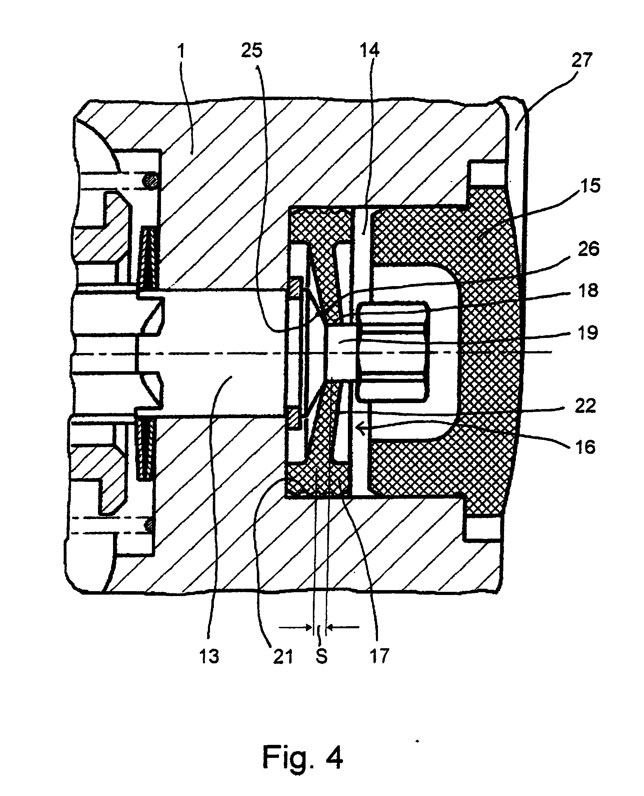

Gemäß Fig. 4 ist der äußere Bereich 17 der Ringraumabdichtung 16 mit radial umlaufenden Dichtlippen 21 versehen, wodurch die Dichtwirkung an der Innenseite der Durchgangsöffnung 14 verbessert wird.

Um bei der Ausführung nach Fig. 5 unter Beibehaltung der Abdichtung eine Relativbewegung des Nachstellteils 13 ausgleichen zu können, ist der in radialer Richtung gesehene Mittelbereich 22 der Ringraumabdichtung 16 mit Falten 23 versehen. Damit auch die Entkopplung vom drehbaren Nachstellteil 13 ohne Materialverwindungen des elastischen Mittelbereichs 22 besonders leicht erfolgt, weist der innere Bereich 18 zwei Dichtlippen 24 auf, die an dem Grund der Ringnut 19 anliegen.

Die Ausführung nach Fig. 4 zeigt zusätzlich zu der oben erläuterten Radialabdichtung 16 eine Axialabdichtung zwischen der Innenseite der Ringraumabdichtung 16 und der Ringnut 19. Dafür ist die zum Sattelinnenraum weisende Ringnutfläche 25 konisch ausgeführt, und eine Seitenfläche 26 des inneren Bereichs 18 stützt sich an der Ringnutfläche 25 ab. Somit wird mittels der Ringraumabdichtung 16 zwischen dem inneren Bereich 18 und der Ringnut 19 einerseits eine Radialabdichtung und zwischen der Konusfläche 25 und der Seitenfläche 26 andererseits eine Axialabdichtung verwirklicht. Damit wird ein besonderer Schutzeffekt des Sattelinnenraums und damit der darin befindlichen Nachstellvorrichtung erzielt.

Zur optimalen Festlegung der Ringraumabdichtung 16 kann die Durchgangsöffnung 14 mit einer Sacklochbohrung ausgelegt sein, gegen deren Grund sich der seitliche Bereich des äußeren Bereichs 17 der Ringraumabdichtung 16 abstützt. Damit ist gewährleistet, daß der innere Bereich 18 der Ringraumabdichtung 16 immer im richtigen Bereich der Ringnut 19 anliegt.

Um sowohl den radialen als auch den axialen Dichteffekt im Bereich der Anlageflächen des inneren Bereichs 18 an den Anlageflächen der Ringnut 19 zu verbessern, ist sowohl bei der Ausführung nach Fig. 4 als auch bei der Ausführung nach Fig. 5 der äußere Bereich 17 um eine Axialstrecke S versetzt gegenüber dem inneren Bereich 18 in der Durchgangsöffnung 14 positioniert.

Bei allen Ausführungsbeispielen ist zusätzlich zu der Ringraumabdichtung 16 noch jeweils ein Verschlußstopfen 15 vorgesehen. Der Verschlußstopfen 15 ist gemäß Fig. 2 gegen Verlieren gesichert. Dafür ist er mit einer Verlängerung 27 versehen, die ihrerseits am Bremssattel 1 mittels einer Halterung 28 befestigt ist. Damit wird ein Verlust des Verschlußstopfens 15 vermieden.

### Bezugszeichenliste:

- 1: Bremssattel
- 2: Bremsscheibe
- 3: Bremsbacke
- 4: Bremsbacke
- 5: Zuspanneinrichtung
- 6: Schwenkhebel
- 7: Hauptebene der Bremsscheibe
- 8: Zuspannwelle
- 9: Druckspindel
- 10: Druckspindel
- 11: Druckstück
- 12: Nachstellmechanismus
- 13: Nachstellteil
- 14: Durchgangsöffnung
- 15: Verschlußstopfen
- 16: Ringraumabdichtung
- 17: äußerer Bereich
- 18: innerer Bereich
- 19: Ringnut
- 20: Metallring
- 21: Dichtlippe
- 22: Mittelbereich
- 23: Falte
- 24: Dichtlippe
- 25: Ringnutfläche
- 26: Seitenfläche
- 27: Verlängerung
- 28: Halterung
- A: Schwenkachse
- S: Axialstrecke

## Patentansprüche

1. Sattelscheibenbremse mit einer Zuspannvorrichtung (5) und einer ein drehbares Nachstellteil (13) aufweisenden und in einem Innenraum eines Sattels (1) befindlichen Nachstellvorrichtung (12), die unter Drehen des Nachstellteils (13) von der Zuspannvorrichtung (5) zum Einstellen des Bremslüftspiels betätigt wird, wobei sich das Nachstellteil (13) derart in eine Durchgangsöffnung (14) in dem Sattel (1) erstreckt, dass es von außerhalb des Sattels (1) betätigbar ist, und bei der eine Dichtung (16) zum Abdichten der Durchgangsöffnung (14) vorgesehen ist,
**dadurch gekennzeichnet, dass**
die Dichtung (16) eine Ringdichtung ist, die mit ihrer Außenseite an der Innenwand der Durchgangsöffnung (14) und mit ihrer Innenseite an einer radialen Mantelfläche des Nachstellteils (13) anliegt.

2. Sattelscheibenbremse nach Anspruch 1, **dadurch gekennzeichnet, daß** die radiale Mantelfläche der Grund einer Ringnut (19) an dem Nachstellteil (13) ist.

3. Sattelscheibenbremse nach Anspruch 2, **dadurch gekennzeichnet, daß** die Dichtung (16) mit einer axialen Deckseite (26) an der entsprechenden Seitenwand (25) der Ringnut (19) anliegt.

4. Sattelscheibenbremse nach Anspruch 3, **dadurch gekennzeichnet, daß** die Seitenwand (25) schräg angestellt ist.

5. Sattelscheibenbremse nach einem der vorangehenden Ansprüche, **dadurch gekennzeichnet, daß** der Querschnitt der Durchgangsöffnung (14) von innen nach außen hin zunimmt und die Dichtung (16) mit ihrer entsprechenden axialen Deckseite an der aus der Querschnittszunahme resultierenden Fläche anliegt.

6. Sattelscheibenbremse nach einem der Ansprüche 3 bis 5, **dadurch gekennzeichnet, daß** die Außenseite der Dichtung (16) um eine vorbestimmte Strecke (S) in axialer Richtung bezüglich ihrer Innenseite versetzt ist.

7. Sattelscheibenbremse nach einem der vorangehenden Ansprüche, **dadurch gekennzeichnet, daß** die Dichtung (16) im Bereich der Anlage an dem Nachstellteil (13) eine geringere Wandstärke als im Bereich der Anlage an der Innenwand der Durchgangsöffnung (14) hat.

8. Sattelscheibenbremse nach einem der vorangehenden Ansprüche, **dadurch gekennzeichnet, daß** die Dichtung (16) an ihrer Außenseite und/oder ihrer Innenseite mindestens eine Dichtlippe (21, 23, 24) aufweist.

9. Sattelscheibenbremse nach einem der vorangehenden Ansprüche, **dadurch gekennzeichnet, daß** die Dichtung (16) in ihrem in radialer Richtung gesehenen Mittelbereich (22) infolge Materialüberschusses (23) nicht gradlinig verläuft.

10. Sattelscheibenbremse nach einem der vorangehenden Ansprüche, **dadurch gekennzeichnet, daß** die Dichtung (16) aus einem elastischen Material ist.

11. Sattelscheibenbremse nach einem der vorangehenden Ansprüche, **gekennzeichnet durch** eine Verstärkungseinrichtung (20) im äußeren Bereich (17) der Dichtung.

12. Sattelscheibenbremse nach einem der vorangehenden Ansprüche, **gekennzeichnet durch** einen die Durchgangsöffnung (14) verschließenden, abnehmbaren Verschlußstopfen (15).

13. Sattelscheibenbremse nach Anspruch 12, **gekennzeichnet durch** eine Halteeinrichtung (27, 28) die den Verschlußstopfen (15) auch dann mit dem Sattel (1) verbunden hält, wenn er von der Durchgangsöffnung (14) abgenommen ist.

## Claims

1. A caliper disc brake comprising a thrust device (5) and an adjustment device (12) which includes a rotatable adjusting member (13) and is located in a cavity in a caliper (1), which adjustment device (12) is operated by the thrust device (5) to adjust the brake lift clearance through rotation of the adjusting member (13), the adjusting member (13) extending into a through aperture (14) in the caliper (1) in such a way that it is operable from outside the caliper (1), and in which a seal (16) is provided to seal the through aperture (14), **characterised in that** the seal (16) is an annular seal which abuts against the inner wall of the through aperture (14) with its outer face and against a radial cylindrical surface of the adjusting member (13) with its inner face.

2. A caliper disc brake according to Claim 1, **characterised in that** the radial cylindrical surface is the bottom of an annular groove (19) in the adjusting member (13).

3. A caliper disc brake according to Claim 2, **characterised in that** an axial cover face (26) of the seal (16) abuts against the corresponding side wall (25) of the annular groove (19).

4. A caliper disc brake according to Claim 3, **characterised in that** the side wall (25) is disposed obliquely.

5. A caliper disc brake according to one of the preceding claims, **characterised in that** the cross-section of the through aperture (14) increases from inside to outside and the seal (16) abuts against the face resulting from the increase in cross-section with its corresponding axial cover face.

6. A caliper disc brake according to one of claims 3 to 5, **characterised in that** the outer face of the seal (16) is offset in the axial direction with respect to its inner face by a predetermined distance (S).

7. A caliper disc brake according to one of the preceding claims, **characterised in that** the seal (16) has a wall thickness which is smaller in the area of its abutment against the adjusting member (13) than in the area of its abutment against the inner wall of the through aperture (14).

8. A caliper disc brake according to one of the preceding claims, **characterised in that** the seal (16) has on its outer face and/or its inner face at least one sealing lip (21, 23, 24).

9. A caliper disc brake according to one of the preceding claims, **characterised in that** the seal (16) has a non-rectilinear configuration in its middle portion (22), seen in the radial direction, as a result of material surplus (23).

10. A caliper disc brake according to one of the preceding claims, **characterised in that** the seal (16) is made of an elastic material.

11. A caliper disc brake according to one of the preceding claims, **characterised by** a reinforcing arrangement (20) in the outer portion (17) of the seal.

12. A caliper disc brake according to one of the preceding claims, **characterised by** a removable occluding plug (15) which closes the through aperture (14).

13. A caliper disc brake according to Claim 12, **characterised by** a retaining arrangement (27, 28) which maintains the occluding plug (15) in connection with the caliper (1) even when it is removed from the through aperture (14).

## Revendications

1. Frein à disque à étrier comportant un dispositif de serrage (5) et un dispositif de réglage (12) présentant un élément rotatif de réglage (13) et situé dans un espace intérieur d'un étrier (1), lequel dispositif est actionné, lorsque l'élément de réglage (13) est entraîné en rotation par le dispositif de serrage (5), pour ajuster le jeu du frein, l'élément de réglage (13) s'étendant de telle manière dans une ouverture de passage (14) ménagée dans l'étrier (1), qu'il puisse être actionné depuis l'extérieur de l'étrier (1), et dans lequel un joint d'étanchéité (16) est prévu pour rendre étanche l'ouverture de passage (14),
**caractérisé en ce que**
le joint d'étanchéité (16) est un joint annulaire d'étanchéité, qui est appliqué par son côté extérieur contre la paroi intérieure de l'ouverture de passage (14) et, par son côté intérieur, contre une surface latérale radiale de l'élément de réglage (13).

2. Frein à disque à étrier selon la revendication 1, **caractérisé en ce que** la surface latérale radiale est le fond d'une rainure annulaire (19) située au niveau de l'élément de réglage (13).

3. Frein à disque à étrier selon la revendication 2, **caractérisé en ce que** le joint d'étanchéité (16) est appliqué, par un côté de recouvrement axial (26), contre la paroi latérale (25) correspondante de la rainure annulaire (19).

4. Frein à disque à étrier selon la revendication 3, **caractérisé en ce que** la paroi latérale (25) est inclinée.

5. Frein à disque à étrier selon l'une des revendications précédentes, **caractérisé en ce que** la section transversale de l'ouverture de passage (14) va en croissant depuis l'intérieur en direction de l'extérieur, et **en ce que** le joint d'étanchéité (16) est appliqué, par son côté de recouvrement axial correspondant, contre la surface résultant de l'augmentation de section transversale.

6. Frein à disque à étrier selon l'une des revendications 3 à 5, **caractérisé en ce que** le côté extérieur du joint d'étanchéité (16) est décalé d'une distance (S) prédéterminée dans le sens axial, par rapport à son côté intérieur.

7. Frein à disque à étrier selon l'une des revendications précédentes, **caractérisé en ce que** le joint d'étanchéité (16) présente, dans la zone d'application contre l'élément de réglage (13), une épaisseur de paroi qui est plus petite que dans la zone de l'application contre la paroi intérieure de l'ouverture de passage (14).

8. Frein à disque à étrier selon l'une des revendications précédentes, **caractérisé en ce que** le joint d'étanchéité (16) présente, au niveau de son côté extérieur et/ou de son côté intérieur, au moins une lèvre d'étanchéité (21, 23, 24).

9. Frein à disque à étrier selon l'une des revendications précédentes, **caractérisé en ce que** le joint d'étanchéité (16) ne s'étend pas en ligne droite dans sa zone médiane (22), vue dans le sens radial, en raison de la matière en excès (23).

10. Frein à disque à étrier selon l'une des revendications précédentes, **caractérisé en ce que** le joint d'étanchéité (16) est fait en une matière élastique.

11. Frein à disque à étrier selon l'une des revendications précédentes, **caractérisé par** un dispositif de renforcement (20) dans la zone extérieure (17) du joint d'étanchéité.

12. Frein à disque à étrier selon l'une des revendications précédentes, **caractérisé par** un bouchon d'obturation (15), amovible, qui ferme l'ouverture de passage (14).

13. Frein à disque à étrier selon la revendication 12, **caractérisé par** un dispositif de retenue (27, 28), qui maintient le bouchon de fermeture (15) relié à l'étrier (1), même lorsqu'il est retiré de l'ouverture de passage (14).
